# EUROPEAN PATENT APPLICATION

(11) **EP 1 746 127 A1**
(43) Date of publication of application: **24.01.2007**
(21) Application number: 06011687.8
(22) Date of filing: 06.06.2006
(51) Int. Cl.: C08K 3/34

(54) **Siloxane elastomer composition comprising anionic powder, method of its production and product containing it**

(30) Priority: 22.07.2005 CN 200510089524
(71) Applicant: SAR HOLDINGS INTERNATIONAL LIMITED, Hong Kong (HK)
(72) Inventor: Carallo, Nunzia Paola, 20124 Milano (IT); Yeung, Kim Ching Kim, 491-501 Castle Peak Road, Tsuen Wan, N.T (HK)
(74) Representative: Koepe, Gerd L.

(57) **Abstract**

The present invention relates to siloxane elastomer composition and to the method of its production, the composition basically consisting of an anionic powder and siloxane elastomer. The siloxane elastomer compostition of the present invention can be used to manufacture various suitable products or be coated on the surfaces of the products to add the negative ions on them, thus to purify the environment and safeguard human health.

## Description

### Field of Invention

The present invention relates to a negative ionic silica gel composition and, more particularly, relates to a negative ionic silica gel composition basically consisting of negative ionic powder and silica gel. This invention also relates to a method of producing the composition and to the product containing said composition.

### Background of the Invention

Negative ion is of great benefit to human health, natural life and biogeocenose, it is called as "Environment Police", "Vitamin in Air", or "Longevous Agent in Atmosphere". The advantages of negative ion in human health care and environment improvements are: purifying air, cleaning water, removing smog and bad smell and eliminating extra positive ion from electronic devices or equipments; improving lung's function, purifying blood and promoting blood circulation, getting rid of being tired, and increasing appetite. Negative ion not only can ameliorate functions of respiratory system, circulatory system and nervous system, but also adjust and improve human metabolism and immunity, etc..

Now, lots of products based on negative ion's benefits to human health care and environment improvements are being developed, such as negative ionic underwear, negative ionic healthy sports socks, negative ionic water, negative ionic producer, negative ionic air-conditioner, negative ionic blower and negative ionic refrigerator, etc..

Chinese patent application CN1542054A has disclosed a nanoscale negative ionic silica gel product and the method of producing it; the nanoscale negative ionic silica gel comprises silica gel, nanoscale negative ionic powder, nanoscale silver oxide powder and a magnetic material, wherein the silica gel is methyl vinyl silicone rubber, the nanoscale negative ionic powder is silicate containing B as characteristic component, Al, Na, Fe and Li in ring structure. The method of this application has the steps of dispersing the nanoscale negative ionic powder and nano silver oxide powder into silica gel, then kneading and molding the material to produce the negative ionic product.

### Summary of the Invention

The object of the present invention is to provide a negative ionic silica gel composition that is more convenient and efficient in providing negative ions, the composition may be either added into silica gels or rubbers for manufacturing various gel or rubber products, or may be coated on any suitable products by means of coating steps, therefore to bring negative ion to these products.

One aspect of the present invention is to provide a negative ionic silica gel composition basically consisting of silica gel and negative ionic powder (NIP).

Another aspect of this invention is to provide a method of producing the negative ionic silica gel composition, said method comprising the step of mixing the silica gel and NIP.

This invention also relates to a negative ionic product made from the negative ionic silica gel composition, and to the method of producing the product.

Detailed description of this invention is shown as follows.

### Negative ionic powder (NIP):

Various commercially available NIPs are used in many products such as paint, textile, plate, etc.. Normally, suitable NIP for silica gel is metal ore powder that was processed from natural ore, natural ore is able to excitate air to release negative ion itself, it does not resort to any other outside power. The example of this ore is well known as tourmaline. The technology of processing natural ore such as shattering, aftercuring, grinding, and drying the powder and/or removing the agglomerate among powder if needed, are in public domain.

Preferred NIPs in the present invention are ores selected from the group consisting of monazite, argil, heluguson and any combination of these. More preferred NIP is a composite NIP that processed from various minerals intermixtures.

The most preferred NIP in the present invention is obtained by processing the combination of monazite, argil and heluguson. The ratio of monazite, argil and heluguson in the combination can be 1: 1: 1, such as composite NIP produced by Kawashima Industrial Co. Ltd..

There is no restriction on the granularity (granular size) of the NIP, it may vary from few nanometers to few micrometers according to the process requirement.

### Silica Gel:

There's no restriction on the silica gel. Suitable common silica gels in the art can be used in this invention, such as dimethylsiloxane polymer, methylvinylsiloxane polymer, methylstyrylsiloxane polymer and methyltrifluoropropylsiloxane polymer. These silica gel materials could be used solely or in any combination of them.

Preferred silica gel is a siloxane elastomer that is obtained by cross-linking reaction of siloxane with crosslinking agent.

Preferred capable siloxane for crosslinking is dimethylvinylsiloxane (VMQ) gel, the most preferred VMQ gel is with the polymerization degree between 7000 and 8000.

The crosslinking agent is peroxide or metallic platinum (Pt). The peroxides include benzoperoxide, 2,4-dichloro-benzoperoxide, dicumyl peroxide, di-t-butyl peroxide, p-1-chlorobutyryl peroxide, 2,5-dimethyl-2,5-bis-t-butyl hexane peroxide, bis(t-butyl peroxy) peroxide, 2,5-dimethyl-2,5-bis(t-butyl peroxy) hexane and t-butyl cumyl peroxide. Preferred crosslinking agent is 2,5-dimethyl-2,5-bis-t-butyl hexane peroxide, more preferred crosslinking agents are commercially available products named C-8, C-8A or C-8B manufactured by Shin-Etsu Silicone, Japan. The amount of the peroxide crosslinking agent is about 0.3 % to about 4 % of the amount of other ingredients in weight.

In the negative ionic silica gel of the present invention, the ratio of NIP and silica gel, by weight, is approximately 1 : 5 to 3 : 2, and the preferred ratio is 1 : 2 to 1 : 1, and the ratio of 1 : 1 is the most preferred.

The negative ionic silica gel composition can be used as additive to add into raw silica gel to manufacture needed products, thus to make them comprising negative ionic material. The proportion of NIP in the products is about 5 to 30 % by weight, preferred is 5 to 20 % by weight, the most preferred is 5 to 10 % by weight.

Alternatively, the negative ionic silica gel composition can be made into a coating so as to cover the products.

The negative ionic silica gel composition can be produced by the following methods steps: blending silica gel and NIP in an appropriate proportion by weight in a mixing device to make them fully mixed. There's no restriction on the time for blending, so far as the silica gel is completely blended with the NIP; ordinarily, 0.5 to 1 hour is enough to achieve the result. Other accessorial additives can also be added into the composition to make it meeting various purposes, if such additives do not affect the essential feature of the composition.

The process may be conducted by mixing the negative ionic silica gel composition together with any appropriate amount of silica gel that is used for manufacturing products, and adding a vulcanizing agent or other accessorial ingredients such as pigment, if needed. Then the blend obtained is molded in common way, and post-treated in the ordinary way such as baking or purging to obtain the final products such as wristbands, necklaces, mattress, insoles, pillow, bandages, waistbands etc..

Alternatively, the NIP is mixed together with liquid silica gel to get the negative ionic silica gel composition in, for example, a paint, then the composition is coated on the proposed products, and then post-treated by steps such as, for example baking. The final products comprising negative ions such as negative ionic underwear, quilts, clothes and hats, blowing boards of air-conditioner, and water treatment devices are then manufactured. The type of paint of negative ionic silica gel composition is more convenient in using and can be covered by any ordinary way, such as spraying, brushing or imprinting.

### Detailed Description of Preferred Embodiments

### Example 1

Provide 5 parts of dimethylvinylsiloxane gel (by weight) and 5 parts of NIP (by weight); put these two components into a blending device and mix them for 1 hour under normal pressure and temperature. The NIP used here is made by Kawashima Industrial Co. Ltd., and the granularity (granular size) is about 5 µm.

Vulcanize-press the negative ionic product obtained by blending together with 2 parts of C-8 (by weight) and 100 parts of dimethylvinyl-siloxane gel (by weight) under 165 °C for 10 minutes by normal compression molding, then bake the component under 200 °C for 4 hours. Furthermore, clean the semi-product with boiling water for 4 hours, and then treat it by ultrasonic treatment for 15 minutes to obtain the final product.

### Example 2

Provide 10 parts of dimethylvinylsiloxane gel (by weight) and 10 parts of NIP (by weight); put these two components into a p blending device and mix them for 1 hour under normal pressure and temperature. The NIP used here is made by Kawashima Industrial Co. Ltd., and the granularity (granular size) is about 5 µm.

Vulcanize-press the negative ionic product obtained by blending together with 0.5 parts of C-8A (by weight) and 100 parts of dimethylvinylsiloxane gel (by weight) under 165 °C for 10 minutes by normal compression molding, then bake the component under 200° C for 4 hours. Furthermore, clean the semi- product with boiling water for 4 hours, and then treat it by ultrasonic treatment for 15 minutes to obtain the final product.

### Example 3

Provide 25 parts of dimethylvinylsiloxane gel (by weight) and 25 parts of NIP (by weight), put these two components into a blending device and mix them for 1 hour under normal pressure and temperature. The NIP used here is made by Kawashima Industrial Co. Ltd., and the granularity (granular size) is about 5 µm.

Vulcanize-press the negative ionic product obtained by mixing together with 1 part of C-8B (by weight) and 100 parts of dimethylvinylsil-oxane gel (by weight) under 165 °C for 10 minutes by normal compression molding, then bake the component under 200 °C for 4 hours. Furthermore, clean the semi- product with boiling water for 4 hours, and then treat it with ultrasonic treatment for 15 minutes to obtain the final product.

### Example 4

Mix 5 parts of dimethylvinyl silicone oil (by weight) and 5 parts of NIP (by weight) for 1 hour. The NIP used here is made by Kawashima Industrial Co. Ltd., and the granularity (granular size) is about 5 µm.

Mix the negative ionic product obtained above with 100 parts of dimethylvinyl-siloxane gel (by weight) in the presence of Pt, spray the mixture on the surface of a molded wristband, then bake it under 200 °C for 4 hours. Further, clean the achieved product with boiling water for 4 hours, and then treat it by ultrasonic treatment for 15 minutes to obtain the final product.

### Analyze of Negative Ionic:

Acquire a negative ionic silica gel paper in following example 1. Put a measuring cup fill of water on the paper; the pH value of the water is about 7.2, assayed by pH Tester. Placing the water for 8 hours and assay the pH value of the water again, the result is about 8.3.

Although preferred embodiments have been depicted and described in detail herein, it will be apparent to those skilful technicians in the relevant art that various additions, substitutions, modifications and the like can be made without departing from the spirit of the invention and these are therefore considered to be within the scope of the invention.

## Claims

1. A negative ionic silica gel composition comprising negative ionic powder and silica gel.

2. The composition as claimed in claim 1, wherein said silica gel is a siloxane elastomer obtained by cross-linking reaction of siloxane with a crossilinking agent

3. The composition as claimed in claim 1 or 2, wherein said silica gel is dimethylvinylsiloxane gel, preferably wherein said silica gel is dimethylvinyl-siloxane gel with a polymerization degree between about 7000 and about 8000.

4. The composition as claimed in any one of claims 1 to 3, wherein said negative ionic powder is metal ore powder, preferably from the group consisting of monazite, argil, heluguson and any combination of these.

5. The composition as claimed in claim 4, wherein said negative ionic powder is a composite negative ionic powder that is obtained from various minerals intermixtures, preferably wherein said composite negative ionic powder is obtained from the combination of monazite, argil and heluguson.

6. The composition as claimed in claim 5, wherein the ratio of monazite, argil and heluguson is about 1 : 1 : 1 by weight.

7. The composition as claimed in any one of claims 1 to 6, wherein the ratio of negative ionic powder and silica gel is from about 1 : 5 to about 3 : 2 by weight, preferably wherein the ratio of negative ionic powder and silica gel is from about 1 : 2 to about 1 : 1 by weight, more preferably wherein the ratio of negative ionic powder and silica gel is about 1 : 1.

8. A method of producing the negative ionic silica gel composition as in any one of claims 1 to 7, said method comprising the step of mixing a negative ionic powder with a silica gel.

9. The method as claimed in claim 8, wherein the ratio of negative ionic powder and silica gel is from about 1 : 5 to about 3 : 2 by weight, preferably wherein the ratio of negative ionic powder and silica gel is from about 1 : 2 to about 1 : 1 by weight, more preferably wherein the ratio of negative ionic powder and silica gel is about 1 : 1.

10. A negative ionic product comprising a silica gel and a composition as claimed in any one of claims 1 to 9 incorporated therein, said product comprising a negative ionic powder incorporated therein in a proportion of about 5 to about 30 % by weight of the total amount of the product.

11. A negative ionic product comprising a silica gel and a composition as claimed in any one of claims 1 to 9 applied thereon, said product comprising a negative ionic powder applied thereon in a proportion of about 5 to about 30 % by weight of the total amount of the product.

12. A negative ionic paint comprising a silica gel and a composition as in any one of claims 1 to 9, said paint comprising a negative ionic powder in a proportion of about 5 to about 30 % by weight in the total amount of the paint.

13. The paint as claimed in claim 12, wherein said negative ionic powder is metal ore powder, preferably wherein said negative ionic powder is selected from the group consisting of monazite, argil, heluguson and any combination of these.

14. The paint as claimed in claim 13, wherein said composite negative ionic powder is obtained from the combination of monazite, argil and heluguson, preferably wherein the ratio of monazite, argil and heluguson is about 1 : 1 : 1 by weight.

15. The paint as claimed in claim 12 to claim 14, wherein the proportion of negative ionic powder in the paint is about 5 to about 20 % by weight, preferably wherein the proportion of negative ionic powder in the paint is about 5 to about 10 % by weight.

16. A method of producing negative ionic paint comprising the steps of:
a) producing a negative ionic silica gel composition as in any one of claims 1 to 7; and
b) putting the mixture of step a) into an appropriate amount of liquid silica gel, and adding a metal Pt together with discretional accessorial agents into the mixture, then blending it into a paint in an ordinary way; said appropriate amount of silica gel being the amount that makes the proportion of negative ionic powder in the paint to be about 5 to about 30 % by weight, preferably wherein the proportion of negative ionic powder in the paint is about 5 to about 20 % by weight, more preferably wherein the proportion of negative ionic powder in the paint is about 5 to about 10% by weight.

17. A method of producing negative ionic product comprising the steps of:
a) producing a negative ionic silica gel composition as in any one of claims 1 to 7; and
b) putting the mixture of step a) into appropriate amount of liquid silica gel, and adding a vulcanizing agent together with discretional accessorial agents into the mixture, molding it by ordinary way, then post-treating it to obtain the final product; said appropriate amount of silica gel being the amount that makes the proportion of negative ionic powder in the paint to be about 5 to about 30% by weight, preferably wherein the proportion of negative ionic powder in the paint is about 5 to about 20% by weight, more preferably wherein the proportion of negative ionic powder in the paint is about 5 to about 10% by weight.

18. The method as claimed in claim 17 , wherein the product is wristband, necklace, mattress, insole, pillow, bandage or waistband.

19. A method of using the negative ionic paint as in any one of claims 12 to 15 in producing negative ionic product, said method comprising the step of coating the negative ionic paint onto the molded product.

20. The method of using as claimed in claim 19, wherein said product is negative ionic underwear, quilt, cloth and hat, blowing board of air-conditioner or water treatment device.
